Europäisches Patentamt

European Patent Office

Office européen des brevets

(19)

(11) Publication number: **0 145 418**
A2

## (12) EUROPEAN PATENT APPLICATION

(21) Application number: 84308300.7

(22) Date of filing: 29.11.84

(51) Int. Cl.⁴: **B 01 D 29/38**, B 01 D 29/36

(30) Priority: 30.11.83 GB 8331976

(43) Date of publication of application: 19.06.85
Bulletin 85/25

(84) Designated Contracting States: **AT BE CH DE FR GB IT
LI LU NL SE**

(71) Applicant: **SOUND DIFFUSION PLC, Datum Works
Davigdor Road, Hove East Sussex BN3 1RZ (GB)**

(72) Inventor: **Stonor, Charles Richard Paul, c/o Datum
Works Davigdor Road, Hove East Sussex BN3 1RZ (GB)**

(74) Representative: **Kennedy, Victor Kenneth et al, G.F.
REDFERN & CO. Marlborough Lodge 14 Farncombe
Road, Worthing West Sussex BN11 2BT (GB)**

(54) **Filter cleansing methods and apparatus.**

(57) Filter cleansing methods and apparatus in processes where a fluid stream is normally recycled through a filter, and means are provided to:

(a) terminate normal flow and open a cleansing stream drain;

(b) open a path to the filter output port for a cleansing stream to close the recycling path;

(c) temporarily open a path from the filter output port to a cleansing stream drain;

(d) close the path to the cleansing stream drain and flush residual pollutant via filter output port to a flusing stream drain;

(e) terminate flushing for a period long enough to allow valves to reset to normal rest positions; and

(f) recommence normal recycling operation.

The method may be applied to baths or to industrial processing plants, and avoids unpleasant filter cleansing operations and hazards to operators health, whilst utilising selective flow-path switching by valves that operate automatically and remotely under the influence of the applied fluid flows, with timing intervals selected to give the required switching operations.

-1-

## FILTER CLEANSING METHODS AND APPARATUS

The invention relates to filter-cleansing methods and apparatus, of a type which enables recycling of a fluid stream through a purification filter and permits the filter to be cleansed of any accumulation of pollutant material after a period of use, with a minimum of physical discomfort and of possible hazards to the health of the operators of apparatus by utilising valves remotely controlled by the flow to switch paths.

In accordance with an exemplary embodiment of the invention, a filter cleansing method comprises the steps of:-

(a) terminating normal flow of a polluted output stream via a first ball-valve to an input port of a filter, from the output port of which a purified return stream is fed back via a second ball-valve to be recycled, whereby said first ball-valve is automatically set to open a path from said filter output port to a cleansing stream drain;

(b) applying a cleansing input stream to said output port of said filter via the series connection of a third ball-valve and said second ball-valve, whereby said third ball-valve is automatically set to block a valve output port leading to a drain provided for a flushing stream and said second ball-valve is automatically set to block a valve output port that is normally open for the purified return stream during recycling, the cleansing stream thus being fed as a reverse flow from the output port to the input port of said filter, from where it is passed to said cleansing stream drain via said first ball-valve, this cleansing mode being maintained for a period sufficiently prolonged to ensure a requisite degree of cleansing of the filter that has been in use;

(c) terminating the supply of said cleansing input stream, whereupon said third ball-valve is automatically re-set to open a path from said second ball-valve to a drain for a flushing stream and said second ball-valve automatically commences to move towards its position in which there is an open path for a purified return stream;

(d) restoring the normal flow to the filter input port via said first ball-valve, which causes said first ball-valve to close the path to said cleansing stream drain, this restoration being effected within a period whose duration is shorter than the re-setting time of said second ball-valve to its normal position so that the path for the return stream remains closed, and the flow through the filter from its input port to its output port flushes away any residual pollutant to pass via said second ball-valve and said third ball-valve to said flushing stream drain;

(e) terminating this flushing mode after a given period by interrupting the normal flow to the filter input port for a duration longer than the time required for said second ball-valve to open the path for a purified return stream; and

(f) **finally** restoring normal flow to the filter input port, whereby the normal recycling operation recommences with a cleansed and flushed filter.

The invention will now be described with reference to the drawings, in which:-

Figure 1 is a simplified schematic illustration of the filter, the three ball-valves, and associated flow-paths and drains, in their rest state;

Figure 2 shows the elements of Figure 1 when the normal recycling operation is effected, with the polluted output stream passing via the first ball-valve to the filter, and the purified return stream flows back via said second ball-valve;

Figure 3 shows the elements of Figure 1 during the cleansing mode, in which the cleansing input stream flows via the third and second ball-valves to pass from the filter output port to the filter input port, and thence on via said first ball-valve to said cleansing stream drain;

Figure 4 shows the elements of Figure 1 at the commencement of the flushing mode, with a flow via said first ball-valve to the filter input port, and thence from the filter output port and said second and third ball-valves to said flushing stream drain; and

Figure 5 is a simplified schematic illustration of one exemplary apparatus embodying the present invention.

0145418

-4-

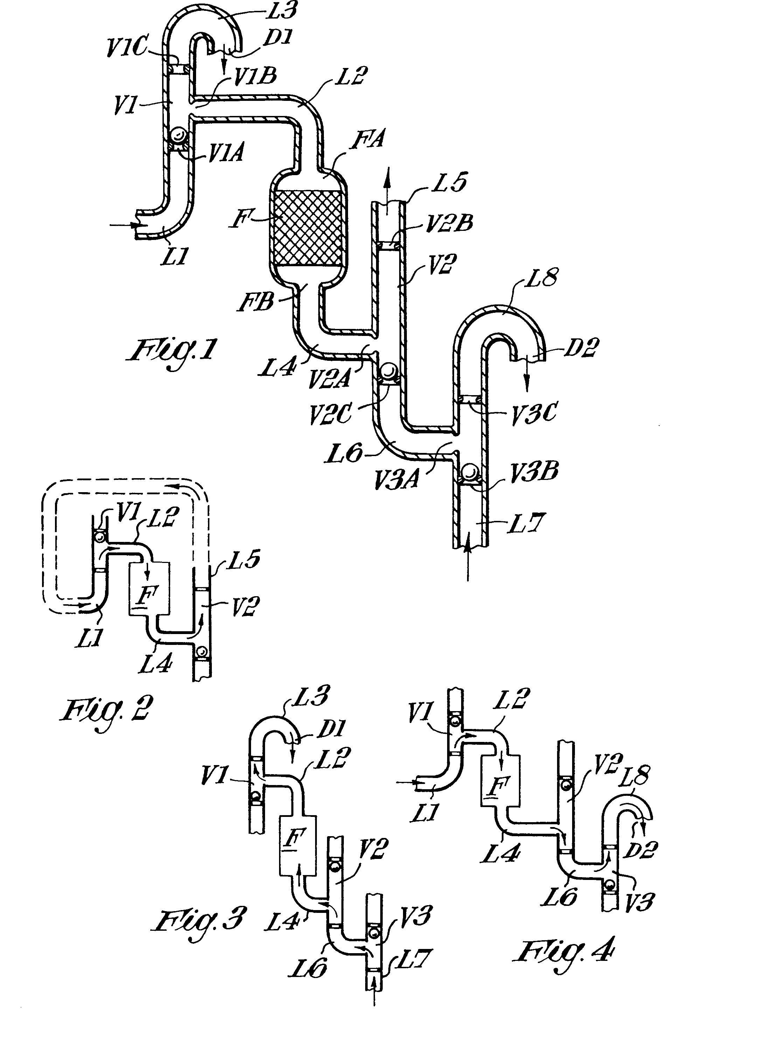

In the arrangement shown in Figure 1, the filter and valve combination for a recycling flow-stream process is shown, with a polluted output stream from a cleansing, treatment or other processing plant passed via a pipe-line L1 to an input port V1A of a first ball-valve V1 which has an output port V1B connected via a pipe-line L2 to a filter input port FA of a filter unit F contained in a housing FH. The first ball-valve V1 has an exhaust port V1C that is connected via a line L3 to a first drain outlet D1 serving as a cleansing stream drain when the apparatus is in the filter cleansing mode.

The filter F has an outlet port FB that is connected via a line L4 to an entry port V2A of a second ball-valve V2, whose normal outlet port V2B is connected by a line L5 forming a return path for a purified return stream during normal operation. The second ball-valve V2 has a dual-function input/output port V2C which is connected via a line L6 to a port V3A of a third ball-valve V3. This ball-valve V3 has a port V3B connected to a line L7, and an exhaust port V3C connected via a line L8 to a flushing drain outlet D2.

The three ball-valves are of generally similar construction, each performing a change-over function by the movement of its ball from one seating to another under the influence of an applied flow, which holds the associated ball against its other seat. Thus, during normal flow the ball-member of the valve V1 is urged by the incoming flow of the polluted output stream from the associated plant to move up and seal the exhaust port V1C, leaving a path via the port V1B and the line L2 to the filter input port.

In normal operation the ball-member of the valve V2 will be sealing the port V2C and the valve is thus providing a path for a purified return stream to flow back via the line L5 for recycling.

When the normal mode is terminated, in step (a), the ball-member of the valve V1 falls, to seal the port V1A, and thus opens an exhaust path for the line L2 to the line L3, and on to the cleansing stream drain D1. In step (b), the supply of a cleansing input stream via the line L7 moves the ball-member of the valve V3 up to seal off the port V3C and the line L8 to the flushing stream drain D2, and open a path from the line L7 to the line L6, so that the cleansing stream can then move the ball-member of the valve V2 to seal the port V2B and close the return flow path via line L5, whilst opening a path via the port V2A and the line L4 to the filter output port FB.

The cleansing  mode can thus function to pass the filter cleansing stream in a reverse flow from the filter output port to the filter input port, and away to the drain D1. When this mode has been maintained for a predetermined time, to pass a given quantity of the cleansing stream backwards through the filter, so that it can be assumed that the particular type of filter in use has been adequately cleansed, then the input of the cleansing stream is terminated, in step (c), and the ball-member of the valve V3 will drop to close the port V3B and open the port V3C. At the same time the ball-member of the valve V2 will commence to drop, but although the valve V2 is generally similar in construction to the other ball-valves, V1 and V3, it differs in two significant respects. The upper port V2B is spaced some distance above the branching port V2A, and the ball-member is a closer fit within its accommodating channel, so that friction delays the movement of the ball-member. Therefore, if step (d) is commenced within a given period after the termination of the cleansing stream being terminated, then the incoming flow via the line L1 can reset the valve V1, and pass a flushing stream through the filter F from its input port to its output port, and thence to the flushing drain D2, the ball-member of the valve V2 being re-set to seal the port V2B. This flushing mode can be maintained for such a duration as is considered necessary to ensure that there is no significant level of pollutant within the filter, and the flow is then terminated by step (e) for a period longer than the time required for the valve-member of the valve V2 to drop down and seal off the port V2C.

When normal operation is required once more, step (f) is initiated to recommence recycling operation, as the valve V1 will be automatically opened and the valve V2 is in the required position.

To illustrate the different flow paths more clearly, Figure 2 shows the relevant elements of Figure 1 with the valve-elements in the position they take up during normal operation, when a complete recycling path is provided between the lines L1 and L5 and the associated plant (not shown). The incoming flow from L1 holds the ball of valve V1 up, to provide a path via L2, the filter F and the line L4 to pass via the valve V2 to the line L5.

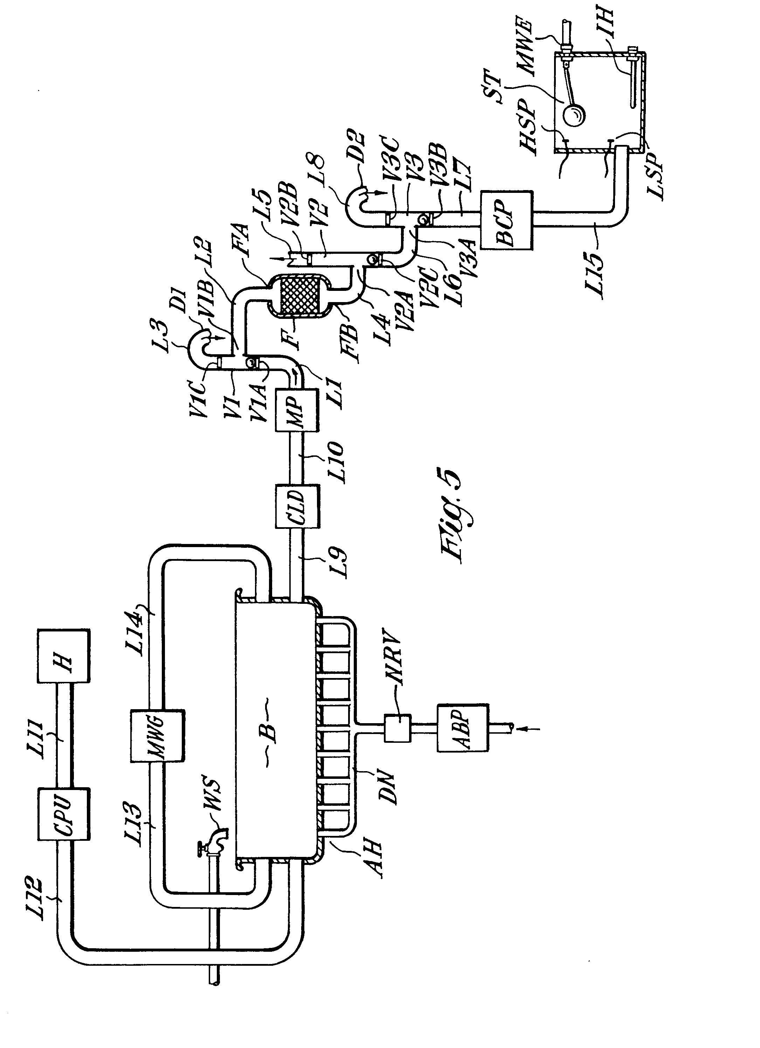

Figure 3 shows the cleansing mode valve settings, when the cleansing stream flow incoming via line L7 sets the valve V3 to open a path via the line L6, and then continue on to open a path through the valve V2 and the line L4 to the filter output port FB. This cleansing stream can then pass in reverse to the normal filter flow, to emerge via the filter input port FA and pass via the line L2, the valve V1 and the line L3 to the cleansing stream drain D1. This reverse flow will tend to remove pollutant deposits within the filter, and the duration of the cleansing mode, or the quantity of the flow required to ensure an effectively adequate cleansing of the filter will depend upon the nature of the pollutants and the type of filter that is in use. In any particular system, an appropriate magnitude can be assessed.

To ensure that a high efficiency is obtained, the reverse-flow cleansing mode is followed by a final flushing mode, in which the flow through the filter is in the same direction as that for normal operation, and it has been found that this effectively reduces any residual pollutants to an insignificant level. The flushing mode is initiated automatically by designing the valve V2 so that it is slow to reset at the termination of the cleansing mode, and by initiating the flushing mode before the valve V2 has had time to reset. Figure 4 shows the settings of the relevant valves during this flushing mode of operation. The stream applied via the line L1 opens a path via the valve V1 to the line L2, the filter F and the line L4 to reach the valve V2 whilst the ball of this valve is still above the branching port V2A. The valve-member is therefore reset to seal off the line L5, and the flushing stream can pass via the valve V2 to the line L6 and the valve V3 to flow out through the line L8 and the drain D2. As described for the cleansing mode, the required duration, or the amount of the flushing stream required to ensure adequate cleansing will be determined in accordance with the nature of the pollutants, or the filter properties. Similarly, the interval between two successive cleansings, i.e. the maximum amount of operation in the normal recycling mode that can be safely tolerated will be determined by these same factors.

In order to give a complete picture of the overall arrangement to be adopted in applying the method proposed in accordance with the invention, and describ a typical apparatus for carrying out the method in use, reference will now be made to the exemplary system shown schematically in Figure 5.

The illustrated system is a cleansing arrangement intended for use in hospitals or nursing homes and the like, where relatively large numbers of patients need to be bathed carefully and regularly, without wasteful use of heated water, and without placing heavy burdensome tasks on the nursing staff, but giving the patients proper care and comfort.

The system is formed around a bath B which is connected between the lines L1 and L5 of the associated purifying system with its filter F in a recycling flow. A water-supply WS, such as a tap over the bath B, enables the system to be filled to the requisite level, including a bath outlet containing lines L9 and L10 leading to the line L1 of the filter arrangement, the valves and filter elements, and the return line L5, which leads back to the bath B via lines L11 and L12.

A main pump MP is connected between the lines L10 and L1 in the recycling path, after a chlorine-level detector CLD, with an electrode assembly to monitor for any drop in the chlorine level below an accepted working level. In the return path the line L5 leads to a heater H which maintains the bath-water at a required temperature, and this is connected via

the line Lll to a chlorine-dosing pump unit CPU which is actuated by the output of the detector CLD if that detector indicates that additional chlorine is required for reasons of hygiene.

In order to facilitate the bathing of patients who may be very frail, or severely handicapped, a stream of bubbles may be injected to rise and gently agitate the water to provide a washing action, using an air blower pump ABP which is connected to a plurality of apertures AH in the bath via a distribution network DN whose main input is connected to the blower ABP via a non-return valve NRV to prevent water-loss.

As a further aid to patient-care, a massage unit is provided, comprising a massage-wave generator MWG in the form of a pump connected between one end of the bath and the other via respective lines L15 and L14.

For use in the cleansing mode, a back-wash cleansing pump BCP is connected to the line L7 and supplies water from a storage tank ST via a line L15. In this exemplary embodiment the tank ST has a capacity of 100 gallons, this being considered an adequate quantity to cleanse the filter F, which is a sand filter. Mains water is supplied from an inlet MWE under the control of a normal ball-cock valve, and an immersion heater IH ensures that the cleansing flow is of an adequate temperature to remove grease particles and the like during the cleansing mode.

For the provision of safety monitoring and automatic control, the storage tank ST is provided with a high-level sensing probe HSP to give an output signal confirming that the storage tank holds an adequate supply for a cleansing mode to be inititated, and a low-level sensing probe LSP to indicate when the water level is lowered to approach the immersion heater, so that the cleansing mode can be terminated before the heater is damaged or air pumped into the system.

These sensing probes can operate display elements to indicate their messages to an operator, who then manually sets the pump controls (not shown) to terminate recycling, initiate cleansing, terminate cleansing and initiate flushing, and finally terminate flushing and return to normal recycling.

However, if desired a programme-control timing unit (not shown) can be utilised to operate pump controls in the desired sequence, and to indicate on suitable display devices the current mode of operation, and give warning of each change.

Other disinfecting agents could be used in place of chlorine, for example ozone. In fields of use other than the medical bathing described with reference to Figure 5, the medium being recycled may be any fluid required for a particular process. The abstract summarises the requisite means in a particularly concise manner, to define the minimum combination that can constitute apparatus for performing the proposed method, and the wording of the abstract is reproduced here for the reader's benefit:-

Filter cleansing methods and apparatus in processes where a fluid stream is normally recycled through a filter, and means are provided to:-

(a) terminate normal flow and open a cleansing stream drain;

(b) open a path to the filter output port for a cleansing stream to close the recycling path;

(c) temporarily open a path from the filter output port to a cleansing stream drain;

(d) close the path to the cleansing stream drain and flush residual pollutant via filter output port to a flushing stream drain;

(e) terminate flushing for a period long enough to allow valves to reset to normal rest positions; and

(f) recommence normal recycling operation.

The method may be applied to baths or to industrial processing plants, and avoids unpleasant filter cleansing operations and hazards to operators health, whilst providing the convenience of remote operation without requiring valves that are operated by some external power source, such as solenoid-operated or hydraulic master-slave spool valves.

The term ball-valve is used for the sake of simplicity, and any shape of valve member capable of positive sealing can be used.

In a pipework system which carries fluid contents the normal practice employed to effect a change in the flow path and/or direction of flow is to fit certain pipes with valves which are opened and closed by the application of power from an external source, such as solenoid operated valves or hydraulic master-slave spool valves.

In the present invention the contents may be changed from one route to another (or reversed) without the employment of valves which require a power source other than the power inherently contained in the moving contents.

The invention could be applied to other filtration systems, than that specifically described above, for a spa bath, for example a system for a swimming pool or for various types of industrial processes.

It will also be appreciated that, as in any plumbing installation, one or more air-vents may be required to avoid the possibility of an air lock at any point in an installation where difficulties have been presented by existing obstacles to the ideal flow path.

As indicated by the opening paragraph, from another aspect the present invention comprises filter cleansing apparatus for carrying out the proposed method in which:-

(a)     means incorporating first and second ball-valves are provided to terminate normal flow of a polluted output stream, when operating;

(b)     means incorporating a third ball-valve to provide a cleansing input as a reverse flow;

(c)     means for terminating the reverse flow;

(d)     means for causing a flushing mode of flow via said first ball-valve within a period shorter than that for resetting said second ball-valve;

(e)     means for terminating said flushing mode to open the path for a purified return stream; and

(f)     means restoring normal flow, whereby the apparatus is caused to effect a full cycle of said cleansing method.

0145418

-15-

CLAIMS:-

1.    A filter cleansing method comprises the steps of:-

(a) terminating normal flow of a polluted output stream via a first ball-valve to an input port of a filter, from the output port of which a purified return stream is fed back via a second ball-valve to be recycled, whereby said first ball-valve is automatically set to open a path from said filter output port to a cleansing stream drain;

(b) applying a cleansing input stream to said output port of said filter via the series connection of a third ball-valve, and said second ball-valve, whereby said third ball-valve is automatically set to block a valve output port leading to a drain provided for a flushing stream and said second ball-valve is automatically set to block a valve output port that is normally open for the purified return stream during recycling, the cleansing stream thus being fed as a reverse flow from the output port to the input port of said filter, from where it is passed to said cleansing stream drain via said first ball-valve, this cleansing mode being maintained for a period sufficiently prolonged to ensure a requisite degree of cleansing of the filter that has been in use;

(c) terminating the supply of said cleansing input stream, whereupon said third ball-valve is automatically

-16-

re-set to open a path from said second ball-valve to a drain for a flushing stream and said second ball-valve automatically commences to move towards its position in which there is an open path for a purified return stream;

(d) restoring the normal flow to the filter input port via said first ball-valve, which causes said first ball-valve to close the path to said cleansing stream drain, this restoration being effected within a period whose duration is shorter than the re-setting time of said second ball-valve to its normal position so that the path for the return stream remains closed, and the flow through the filter from its input port to its output port flushes away any residual pollutant to pass via said second ball-valve and said third ball-valve to said flushing stream drain;

(e) terminating this flushing mode after a given period by interrupting the normal flow to the filter input port for a duration longer than the time required for said second ball-valve to open the path for a purified return stream; and

(f) finally restoring normal flow to the filter input port, whereby the normal recycling operation recommences with a cleansed and flushed filter.

2. A method as claimed in Claim 1, in which each said step (a) to (f) is initiated manually by an operator.

3.    A method as claimed in Claim 1, in which step (a) is initiated manually, and the control operation automatically triggers a programme-controller to complete the sequence of steps (b) to (f) in accordance with a predetermined programme schedule.

4.    A method as claimed in Claim 1, in which said steps (a) to (f) are automatically operated in sequence when triggered by a timing means, or by a monitor sensing the total volume-flow of fluid or the chemical or physical state thereof.

5.    A method as claimed in any preceding Claim, in which said polluted output stream is a water flow from the outlet of a bath for human or animal bodies, and said purified return  stream is fed back to said bath.

6.    A method as claimed in Claim 5, in which means are provided to heat said return stream.

7.    A method as claimed in Claim 5 or Claim 6, in which detector means are provided to sense the level of a disinfectant agent contained in said output stream.

8.    A method as claimed in Claim 7, in which said detector means controls a dosage pump in said return stream path to add disinfectant when necessary.

9.    A method as claimed in any one of Claims 5 to 8, in which an aeration pump is provided to produce a stream of bubbles rising through the water in said bath to agitate and so facilitate the cleansing action of said recycled stream.

10.    A method as claimed in any one of Claims 5 to 7, in which a massage-wave generator is connected to produce waves in the water contained in said bath.

11.    A method as claimed in any preceding Claim in which the duration of said cleansing mode is determined by the volume of water contained in a storage tank which supplies said cleansing stream, a low-level sensor being provided to terminate the flow at a predetermined level.

12.    A method as claimed in Claim 11, in which said storage tank contains a heater to provide a cleansing stream of given temperature.

13.    A method as claimed in any preceding Claim, in which said filter is a sand filter.

14.      Filter cleansing apparatus for carrying out the method as claimed in any preceding Claim, in which:-

(a)      means incorporating first and second ball-valves are provided to terminate normal flow of a polluted output stream, when operating;

(b)      means incorporating a third ball-valve to provide a cleansing input as a reverse flow;

(c)      means for terminating the reverse flow;

(d)      means for causing a flushing mode of flow via said first ball-valve within a period shorter than that for resetting said second ball-valve;

(e)      means for terminating said flushing mode to open the path for a purified return stream; and

(f)      means restoring normal flow, whereby the apparatus is caused to effect a full cycle of said cleansing method.

Fig.1

Fig.2

Fig.3

Fig.4

0145418

Fig. 5